# EUROPEAN PATENT SPECIFICATION

(11) **EP 2 005 063 B1**
(45) Date of publication and mention of the grant of the patent: **15.09.2010**
(21) Application number: 06831597.7
(22) Date of filing: 27.11.2006
(51) Int. Cl.: F23C 9/00, F23K 1/04, F23L 7/00, C10B 57/04, C10L 9/08

(54) **COAL UPGRADING PROCESS UTILIZING NITROGEN AND CARBON DIOXIDE**
KOHLEVERBESSERUNGSVERFAHREN UNTER VERWENDUNG VON STICKSTOFF UND KOHLENDIOXID
PROCESSUS DE VALORISATION DU CHARBON UTILISANT DE L'AZOTE ET DU CO2

(30) Priority: 29.11.2005 US 740607 P; 21.11.2006 US 562018
(43) Date of publication of application: 24.12.2008
(60) Divisional application: 10152787.7
(73) Proprietor: L'AIR LIQUIDE, Société Anonyme pour l'Etude et l'Exploitation des Procédés Georges Claude, 75321 Paris Cedex 07 (FR); Varagani, Rajani K., Lombard IL 60148 (US)
(72) Inventor: VARAGANI, Rajani K., Lombard, Illinois 60148 (US); PRANDA, Pavol, Lisle, Illinois 60532 (US)
(74) Representative: Conan, Philippe Claude
(86) International application number: PCT/IB2006/003373
(87) International publication number: WO 2007/063388

(56) References cited:
- GB-A- 1 457 353
- US-A- 4 176 011
- US-A1- 2004 261 671
- US-A1- 2005 241 217

## Description

Coal, when mined, comes with lot of impurities. The process of coal upgrading at the mine has been practiced for a long time, mainly to remove the moisture and other easily removable impurities. It was found that steam and certain inert gases were used before for this process. This process is not practiced all the time because of unavailability of the ingredients and economical reasons.

In terms of prior art, documents US-A-4,176,011 and GB-A-1457353 teach coke oven processes where coal is contacted with a mixture of carbon dioxide, nitrogen and other compounds.

US 2005/241217 A1 discloses a coal upgrading method comprising directly contacting the coal with superheated steam.

US 2004/261671 A1 discloses a coal combusting process wherein carbon dioxide is captured in flue gas and used as a fluidizing gas for the coal.

The present invention proposes an innovative process to upgrade/clean coal prior to its use. Upgrading the coal refers to reducing various impurities that are present in mined or raw coal to make the coal cleaner, and also to increase the energy content per unit weight of the coal. The proposed process deans or upgrades the coal using Carbon Dioxide (CO₂), and Nitrogen (N₂). Combusting upgraded coal results in lower environmental pollutant emissions and increased combustion efficiency. Some coals that cannot be combusted in raw condition can be made possible to combust with the proposed upgrading process.

Purifying the flue gas obtained from combustion of coal is often very expensive. Any effort to purify the coal prior to the combustion can result in significant savings. Also, some lower rank coals that cannot be combusted in typical/traditional combustors can be made possible to combust with the proposed upgrading process.

For a further understanding of the nature and objects of the present invention, reference should be made to the following detailed description, taken in conjunction with the accompanying drawings, in which like elements are given the same or analogous reference numbers and wherein:
Figure 1 is a schematic of an integrated process for upgrading coal using carbon dioxide and nitrogen.
Figure 2 is a schematic of the process of Figure 1 utilizing a carbon dioxide cleaning unit.
Figure 3 is a schematic of the process of Figure 1 utilizing a nitrogen cleaning unit.
Figure 4 is a schematic of the process of Figure 1 utilizing carbon dioxide and nitrogen cleaning units.
Figure 5 is a schematic of the process of Figure 1 utilizing flue gas recycling.
Figure 6 is.a schematic of the process of Figure 1 utilizing a carbon dioxide cleaning unit and flue gas recycling.
Figure 7 is a schematic of the process of Figure 1 utilizing a nitrogen cleaning unit and flue gas recycling.
Figure 8 is a schematic of the process of Figure 1 utilizing a carbon dioxide cleaning unit, a nitrogen cleaning unit, and flue gas recycling.

The present process proposes the integrated use of carbon dioxide (CO₂) and nitrogen (N₂) for the process of upgrading the coal. As CO₂ Is a better solvent for non-non-polar compounds, the impurities present in the coal (e.g. Sulfur based) that are non-non-polar in nature are better removed with CO₂ rather than steam. Use of hot N₂ mainly to decrease the moisture content in the coal improves the combustion performances of the coal and hence the efficiency of the process. As a result of this upgrading process, a higher heating value coal with lower impurities can be obtained.

The invention as defined in the claims is directed to an integrated coal upgrading and combustion process including the following steps. Air is separated into streams of oxygen-enriched air and nitrogen-enriched air. The nitrogen- , enriched air stream is heated. The heated nitrogen-enriched air stream is introduced into a coal upgrading apparatus containing coal. The heated nitrogen-enriched air is allowed to contact the coal in the coal upgrading apparatus for a selected period of time. The stream of oxygen-enriched air and the coal from the coal upgrading apparatus are introduced to a combustion chamber. The coal and oxygen-enriched air are combusted in the combustion chamber thereby producing flue gas. The flue gas is dried, purified, and compressed to produce a carbon dioxide-rich fluid. The carbon dioxide-rich fluid is introduced to the coal upgrading apparatus. The carbon dioxide-rich fluid is allowed to contact the coal in the coal upgrading apparatus for a selected period of time.

The disclosed process can also include one or more of the following aspects.
- collecting some of the flue gas from the combustion chamber before said drying, purifying, and compressing step is performed and combining the collected flue gas with the stream oxygen-enriched gas being introduced to the combustion chamber
- allowing the carbon dioxide-rich fluid to exit the coal upgrading apparatus and into a first cleaning unit, wherein contact between the carbon dioxide-rich: fluid and the coal in the coal upgrading apparatus results in solvation of some non-polar constituents of the coal into the carbon dioxide-rich fluid; and
   separating out some of the carbon dioxide from the combined carbon dioxide-rich fluid and the non-polar constituents at the first cleaning unit; and introducing the separated out carbon dioxide back into the coal upgrading apparatus; and
   removing at least some of a volatile component content of the non-polar consitutents from non-polar consitutents; and introducing the separated volatile content Into the combustion chamber.
- during the step of allowing the carbon dioxide-rich fluid to contact, the coal upgrading apparatus Is sealed and has a pressure greater than ambient.
- the carbon dioxide-rich fluid is a liquid.
- the carbon dioxide-rich fluid is a gas.
- the carbon dioxide-rich fluid has a pressure of no less than 1000psia (69 bara.) - allowing the nitrogen-enriched air to exit the coal upgrading apparatus and into a second cleaning unit, wherein contact between the nitrogen-enriched air and the coal in the coal upgrading apparatus results in removal of some of the moisture in the coal; and separating out moisture from the nitrogen-enriched air at the second cleaning unit to produce dried nitrogen-enriched air; and

   introducing the dried nitrogen-enriched air into the coal upgrading apparatus.
- during the step of allowing the heated nitrogen-enriched air to contact,

   the coal upgrading apparatus is vented.
- the stream of nitrogen-enriched air is heated with heat produced by the combusting step.
- the stream of nitrogen-enriched air is heated with heat produced by a flame separate from said combusting step.
- stream of nitrogen-enriched air is heated to a temperature of greater than 100°C.
- the oxygen-enriched gas has an oxygen concentration in a range of from 21% to 99.5%.
- the nitrogen-enriched gas has a nitrogen concentration In a range of from 79% to 99.5 %.
- the coal is not in a slurry with water.
- the combustion chamber is part of a boiler.

The process of the invention may be carried-out in an integrated system which an include one or more of the following aspects.
- The integrated system also includes an oxidant line adapted and configured to facilitate fluid communication between the oxygen-enriched gas stream outlet and the combustion chamber, and a flue gas recycle line fluidly communicating with the drying, purifying, and compressing device and the oxidant line; and a mixing element disposed at a location wherein the flue gas recycle line and the oxidant line fluidly communicate, the mixing element adapted and configured to mix flue gas received from the flue gas recycle line with oxidant from said oxygen-enriched gas stream outlet.
- The integrated system also includes a first cleaning unit fluidly communicating with the coal upgrading apparatus via a carbon dioxide vent line and via the carbon dioxide-rich fluid feed line, said first cleaning unit also fluidly communicating with the combustion chamber via a volatiles line, wherein the first cleaning unit is configured and adapted to: receive carbon dioxide-rich fluid from said coal upgrading apparatus containing a mixture of carbon dioxide and non-polar constituents therefrom; and separate at least some of carbon dioxide from the mixture of carbon dioxide and non-polar constituents; and direct the separated carbon dioxide to said coal upgrading apparatus via said carbon dioxide-rich fluid feed line; and separate out least some of a volatile component content of the non-polar consitutents from the non-polar constituents; and direct the separated volatile component content to said combustion chamber via said volatiles line.
- The system also includes a second cleaning unit fluidly communicating with the coal upgrading unit via a nitrogen vent line and a nitrogen return line, wherein the first cleaning unit is configured and adapted to: receive a mixture of nitrogen-enriched air and moisture from said coal upgrading apparatus via said nitrogen vent line; separate at least some moisture from the mixture of nitrogen-enriched air and moisture to produce dried nitrogen-enriched air; and direct the dried nitrogen-enriched air into said coal upgrading apparatus.
- The system also includes a heat exchanger adapted and configured to heat nitrogen-enriched air from The system also includes a nitrogen-enriched air stream outlet with heat produced from combustion of coal and oxygen-enriched air in The system also includes combustion chamber.

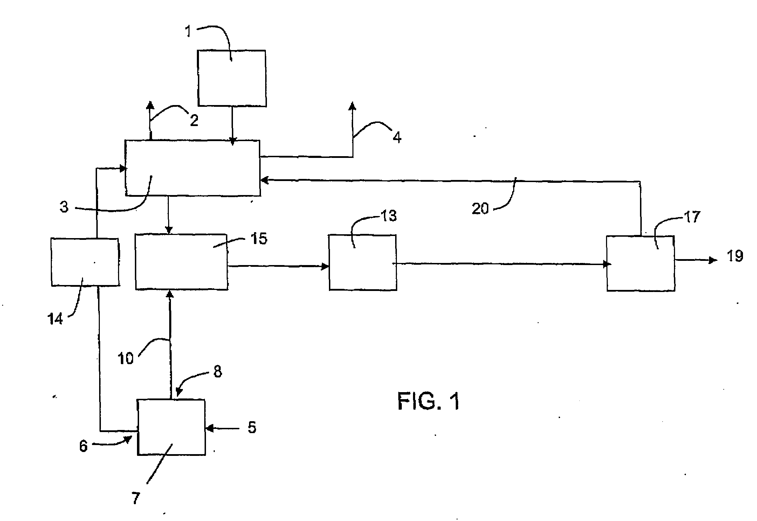

As best illustrated in Figure 1, air feed 5 is separated into oxygen-ennched air and nitrogen-enriched air at air separation unit (ASU) 7. The oxygen-enriched air leaves oxygen-enriched air outlet 8 and is directed by oxidant line 10 to combustion chamber 15. The nitrogen-enriched air leaves nitrogen-enriched air outlet 6 and is directed to heating device 14 and then to coal upgrading apparatus 3. Typical oxygen and nitrogen concentrations are in a range of from 80 % to 99.5 %. Coal from coal supply 1 is also caused to be placed into coal upgrading apparatus 3.

Coal and oxygen-enriched air are combusted in combustion chamber 15 whereby producing flue gas. Optionally, air may also be fed to the combustion chamber. In this case, the total oxygen concentration of the combined oxygen-enriched air and air entering the combustion chamber 15 is 21% by volume or higher. The system and process is particularly applicable to a combustion chamber 15 that is a boiler. The flue gas is directed to optional flue gas cleaning unit 13 to remove impurities in a known way. The non-cleaned flue gas or cleaned flue gas (in the case where unit 13 is selected) is then directed to flue gas drying, purifying, and compressing device 17. Cleaned, dried, purified (as required), and compressed flue gas is then directed to coal upgrading apparatus 3 via carbon dioxide-rich fluid feed line 20. Optionally, cleaned, dried, purified, and compressed flue gas may also be directed out of the drying, purifying, and compressing device to a use or storage device 19.

In operation, coal is alternately upgraded by either the nitrogen-enriched air or the carbon dioxide-rich fluid.

During treatment by the nitrogen-enriched air, the nitrogen-enriched air is heated at heating device. While the heating device may be external to the combustion chamber 15 and combustion process operated therein, preferably heat is imparted by the combustion process to the nitrogen-enriched air via heating device 15. The system and process are more fully integrated in this manner thereby reducing operating and capital costs. The temperature of the nitrogen is chosen so that a desired level of moisture can be removed with minimal or no release of volatiles from the coal. These volatiles are preferably retained by the coal from a combustion point of view. The nitrogen also may remove some sulfur-oontaining compounds and nitrogen-containing compounds. Removing the moisture from the coal improves the combustion characteristics as the heating value of the coal (Btu/weight basis) will be increased. In other words, a lower amount of the dried coal will be required to produce the same energy by combustion as the undried coal. One skilled in the art will appreciate that higher temperatures will increase the efficiency by which moisture is removed from the coal. The heated nitrogen-enriched air carries away some of the moisture via vent line 2. While the coal upgrading apparatus 3 may be sealed and optionally pressurized during treatment of the coal by the nitrogen-enriched air, preferably it is at least partially vented during treatment.

During treatment by the carbon dioxide-rich fluid, the coal upgrading apparatus 3 is pressurized with the carbon dioxide-rich fluid from carbon dioxide-rich fluid feed line 20 and then sealed. The pressurized carbon dioxide-rich fluid is then allowed to contact the coal for a desired period of time in order to dissolve non-polar constituents (such as sulfur-containing compounds and nitrogen-containing compounds) in the coal. The pressurized carbon-dioxide can also dissolve heavy metals, non-limiting examples of which include Arsenic and Sodium. At relatively higher pressures, carbon dioxide exhibits excellent solvent properties. The carbon dioxide-rich fluid may be introduced as a gas or a liquid. While the carbon dioxide-rich fluid will often include multiple components, including carbon dioxide, oxygen, nitrogen, and NOx, the carbon dioxide-rich fluid may potentially also be in a supercritical fluid state. One skilled in the art will appreciate that the pressure and temperature of the carbon dioxide-rich fluid may be selected based upon the type of coal and impurities targeted. Preferably, the carbon dioxide-rich fluid has a pressure of no less than 1000 psia. After treatment, the coal upgrading apparatus is vented via a carbon dioxide vent line 4. It should be noted that a single line may be used for vents 2 and 4.

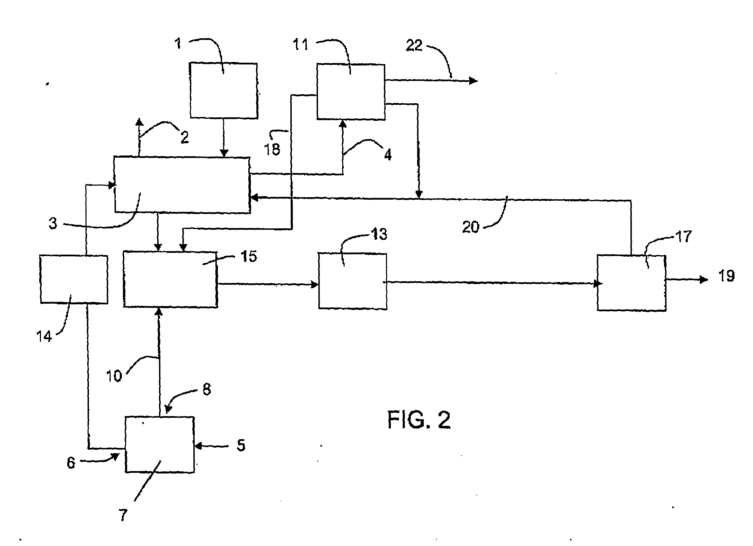

As best shown in Fig. 2, carbon dioxide exiting the coal upgrading apparatus 3 may optionally be cleaned and recycled. In this embodiment, carbon dioxide containing non-polar constituents from the coal exits coal upgrading apparatus 3 via carbon dioxide vent line 4 and is introduced to first cleaning unit 11. At least some of the carbon dioxide is then separated from the non-polar constituents in a known manner. The separated carbon dioxide is then directed to carbon dioxide-rich fluid feed line 20 for reentry into coal upgrading apparatus 3. At least some of the volatile content of the non-polar constituents is then separated out and directed to the combustion chamber 15 via volatiles line 18 where they are combusted with the oxygen-enriched air and coal. The remainder of the carbon dioxide-depleted and volatile-depleted content, such as heavy metals, may be vented via vent 22.

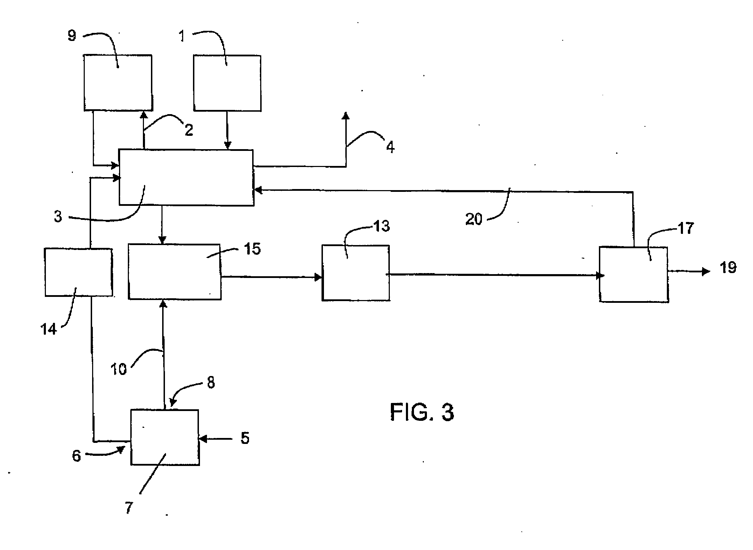

As best illustrated in Fig. 3, the nitrogen exiting the coal upgrading apparatus 3 may optionally be cleaned and recycled. Nitrogen and moisture exiting the coal upgrading apparatus 3 via nitrogen vent 2 may be dried at second cleaning unit 9 and the dried nitrogen recycled back to the coal upgrading apparatus 3.

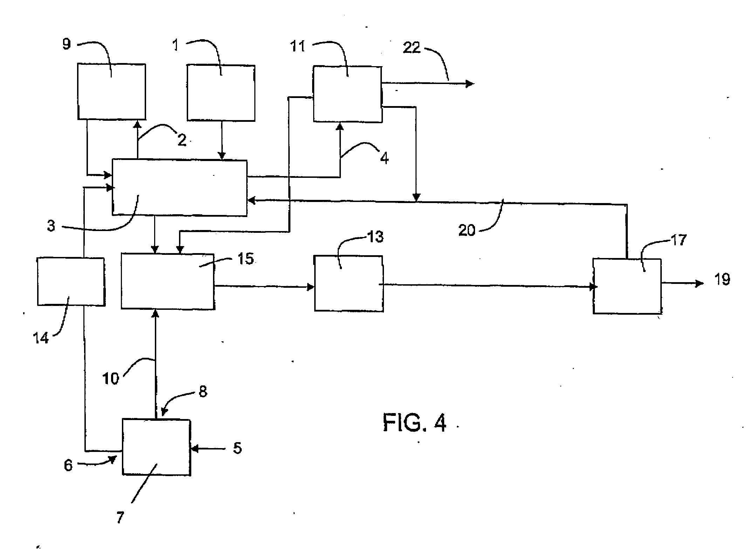

As best shown in Fig. 4, the nitrogen and carbon dioxide leaving the coal upgrading apparatus 3 may optionally be cleaned and recycled as described above in the embodiments of Figs. 2 and 3.

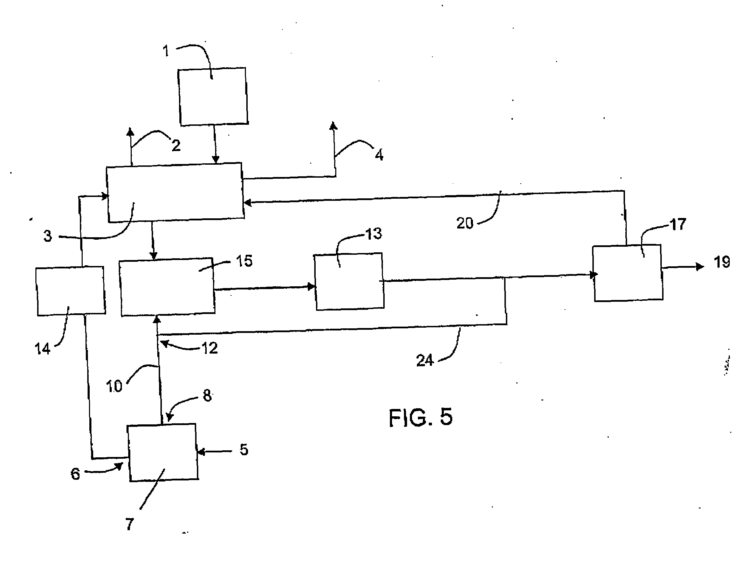

As best illustrated in Fig. 5, a portion of flue gas may be recycled to the combustion chamber 15. After the flue gas is cleaned at optional flue gas cleaning unit 13, a portion the cleaned flue gas then may be directed by flue gas recycle line 24 to mixer 12 where it is mixed with oxygen-enriched gas and introduced to combustion chamber 15 via oxidant line 10.

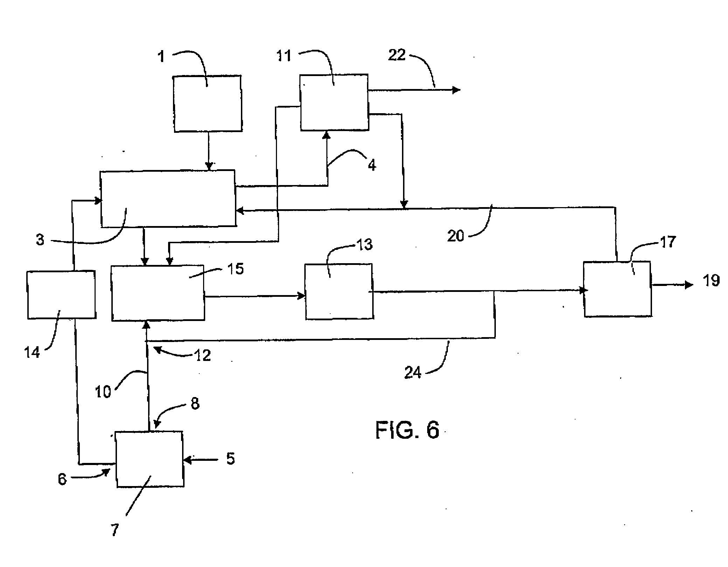

As best shown in Fig. 6, the carbon dioxide exiting the coal upgrading apparatus 3 may be cleaned and a portion of the flue gas may be recycled to the combustion chamber 15 as described above in the embodiments of Figs. 2 and 5.

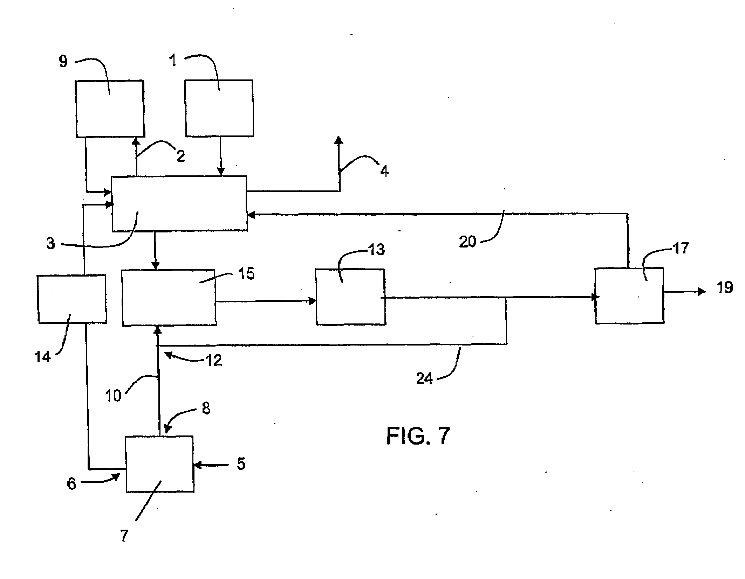

As best shown in Fig. 7, the nitrogen exiting the coal upgrading apparatus 3 may be cleaned and a portion of the flue gas may be recycled to the combustion chamber 15 as described above in the embodiments of Figs. 3 and 5.

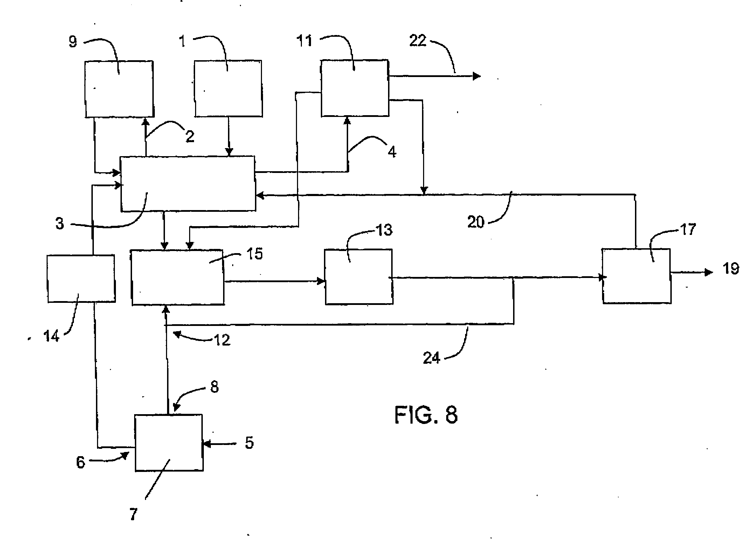

As best shown in Fig. 8, the carbon dioxide and nitrogen exiting the coal upgrading apparatus 3 may be cleaned and a portion of the flue gas may be recycled to the combustion chamber 15 as described above in the embodiments of Figs. 4 and 5.

## Claims

1. An integrated coal upgrading and combustion process, comprising the steps of: separating air into streams of oxygen-enriched air and nitrogen-enriched air; heating the nitrogen-enriched air stream; introducing the heated nitrogen-enriched air stream into a coal upgrading apparatus containing coal; allowing the heated nitrogen-enriched air to contact the coal in the coal upgrading apparatus for a selected period of time; introducing the stream of oxygen-enriched air and the coal from the coal upgrading apparatus to a combustion chamber; combusting the coal and oxygen-enriched air in the combustion chamber thereby producing flue gas; drying, purifying, and compressing the flue gas to produce a carbon dioxide-rich fluid; introducing the carbon dioxide-rich fluid to the coal upgrading apparatus; and allowing the carbon dioxide-rich fluid to contact the coal in the coal upgrading apparatus for a selected period of time, the steps of allowing said heated nitrogen-enriched air to contact said coal and allowing said carbon dioxide-rich fluid to contact said coal being not simultaneous.

2. The process of claim 1, further comprising the steps of: collecting some of the flue gas from the combustion chamber before said drying, purifying, and compressing step is performed; and combining the collected flue gas with the stream oxygen-enriched gas being introduced to the combustion chamber.

3. The process of claim 1, further comprising the steps of: allowing the carbon dioxide-rich fluid to exit the coal upgrading apparatus and into a first cleaning unit, wherein contact between the carbon dioxide-rich fluid and the coal in the coal upgrading apparatus results in solvation of some non-polar constituents of the coal into the carbon dioxide-rich fluid; separating out some of the carbon dioxide from the combined carbon dioxide-rich fluid and the non-polar constituents at the first cleaning unit; introducing the separated out carbon dioxide back into the coal upgrading apparatus; removing at least some of a volatile component content of the non-polar consitutents from non-polar consitutents; and introducing the separated volatile content into the combustion chamber.

4. The process of claim 1, wherein, during said step of allowing the carbon dioxide-rich fluid to contact, the coal upgrading apparatus is sealed and has a pressure greater than ambient.

5. The process of claim 1, wherein the carbon dioxide-rich fluid is a liquid.

6. The process of claim 1, wherein the carbon dioxide-rich fluid is a gas.

7. The process of claim 1, wherein the carbon dioxide-rich fluid has a pressure of no less than 1,000 psia. (69 bara).

8. The process of claim 1, further comprising the steps of: allowing the nitrogen-enriched air to exit the coal upgrading apparatus and into a second cleaning unit, wherein contact between the nitrogen-enriched air and the coal in the coal upgrading apparatus results in removal of some of the moisture in the coal; separating out moisture from the nitrogen-enriched air at the second cleaning unit to produce dried nitrogen-enriched air; and introducing the dried nitrogen-enriched air into the coal upgrading apparatus.

9. The process of claim 1, wherein, during said step of allowing the heated nitrogen-enriched air to contact, the coal upgrading apparatus is vented.

10. The process of claim 1, wherein the stream of nitrogen-enriched air is heated with heat produced by said combusting step.

11. The process of claim 1, wherein the stream of nitrogen-enriched air is heated with heat produced by a flame separate from said combusting step.

12. The process of claim 1, wherein the stream of nitrogen-enriched air is heated to a temperature of greater than 100 °C.

13. The process of claim 1, wherein the oxygen-enriched gas has an oxygen concentration in a range of from 2 1 % to 99.5%.

14. The process of claim 1, wherein the nitrogen-enriched gas has a nitrogen concentration in a range of from 79% to 99.5 %.

15. The process of claim 1, wherein the coal is not in a slurry with water.

## Patentansprüche

1. Integriertes Kohleveredlungs- und Verbrennungsverfahren, umfassend die folgenden Schritte: Trennen von Luft in Ströme von sauerstoffangereicherter Luft und stickstoffangereiclierter Luft, Erhitzen des stickstoffangereicherten Luftstroms; Einführen des erhitzten, stickstoffangereicherten Luftstroms in eine Kohle enthaltende Kohleveredlungsanlage; In-Kontakt-Bringen des erhitzten, stickstoffangereicherten Luftstroms mit der Kohle in der Kohleveredlungsanlage über einen ausgewählten Zeitraum; Einführen des Stroms sauerstoffangereicherter Luft und der Kohle aus der Kohleveredlungsanlage in eine Verbrennungskammer; Verbrennen der Kohle und der sauerstoffangereicherten Luft in der Verbrennungskammer, wodurch ein Verbrennungsgas erzeugt wird; Trocknen, Reinigung und Komprimieren des Verbrennungsgases zur Erzeugung eines kohlendioxidreichen Fluids; Einführung des kohlendioxidreichen Fluids in die Kohleveredlungsanlage und In-Kontakt-Bringen des kohlendioxidreichen Fluids mit der Kohle in der Kohleveredlungsanlage über einen ausgewählten Zeitraum, wobei die Schritte des In-Kontakt-Bringens dieser stickstoffangereicherten Luft mit der Kohle und des In-Kontakt-Bringens dieses kohlendioxidreichen Fluids mit der Kohle nicht gleichzeitig erfolgen.

2. Verfahren nach Anspruch 1, weiterhin umfassend die folgenden Schritte: Auffangen eines Teils des Verbrennungsgases aus der Verbrennungskammer, bevor der Schritt des Trocknens, Reinigens und Verdichtens durchgeführt wird, und Kombinieren des aufgefangenen Verbrennungsgases mit dem Strom sauerstoffangereicherten Gases, das in die Verbrennungskammer eingeführt wird.

3. Verfahren nach Anspruch 1, weiterhin umfassend die folgenden Schritte: Ausströmen Lassen des kohlendioxidreichen Fluids aus der Kohleveredlungsanlage und in eine erste Reinigungseinheit, wobei der Kontakt zwischen dem kohlendioxidreichen Fluid und der Kohle in der Kohleveredlungsanlage zu einem Lösen einiger unpolarer Bestandteile der Kohle in dem kohlendioxidreichen Fluid führt, Abtrennen eines Teils des Kohlendioxids aus dem mit den unpolaren Bestandteilen vereinigten kohlendioxidreichen Fluid an der ersten Reinigungseinheit; Rückführen des abgetrennten Kohlendioxids in die Kohleveredlungsanlage; Entfernen mindestens eines Teils eines flüchtigen Bestandteilgehalts der unpolaren Bestandteile von den unpolaren Bestandteilen; und Einführen des abgetrennten flüchtigen Gehalts in die Verbrennungskammer.

4. Verfahren nach Anspruch 1, wobei die Kohleveredlungsanlage während des Schritts des In-Kontakt-Bringens mit dem kohlendioxidreichen Fluid verschlossen wird und einen höheren als den Umgebungsdruck aufweist.

5. Verfahren nach Anspruch 1, wobei das kohlendioxidreiche Fluid eine Flüssigkeit ist.

6. Verfahren nach Anspruch 1, wobei das kohlendioxidreiche Fluid ein Gas ist.

7. Verfahren nach Anspruch 1, wobei das kohlendioxidreiche Fluid einen Druck von nicht weniger als 1.000 psia (69 bara) aufweist.

8. Verfahren nach Anspruch 1, weiterhin umfassend die folgenden Schritte: Ausströmen Lassen der stickstoffangereicherten Luft aus der Kohleveredlungsanlage und in eine zweite Reinigungseinheit, wobei der Kontakt zwischen der stickstoffangereicherten Luft und der Kohle in der Kohleveredlungsanlage zur Entfernung eines Teils der Feuchtigkeit in der Kohle führt; Abtrennung der Feuchtigkeit aus der stickstoffangereicherten Luft in der zweiten Reinigungseinheit zur Erzeugung von getrockneter, stickstoffangereicherter Luft und Einführen der getrockneten, stickstoffangereicherten Luft in die Kohleveredlungsanlage.

9. Verfahren nach Anspruch 1, wobei die Kohleveredlungsanlage während des Schritts des In-Kontakt-Bringens der erhitzten, stickstoffangereicherten Luft belüftet wird.

10. Verfahren nach Anspruch 1, wobei der Strom von stickstoffangereicherter Luft mit der Hitze erhitzt wird, die durch den Verbrennungsschritt erzeugt wird.

11. Verfahren nach Anspruch 1, wobei der Strom von stickstoffangereicherter Luft mit der Hitze erhitzt wird, die durch eine von diesem Verbrennungsschritt getrennte Flamme erzeugt wird.

12. Verfahren nach Anspruch 1, wobei der Strom von stickstoffangereicherter Luft auf eine Temperatur von mehr als 100 °C erhitzt wird.

13. Verfahren nach Anspruch 1, wobei der Strom von sauerstoffangereicherter Luft eine Sauerstoffkonzentration im Bereich von 21 bis 99,5 % aufweist.

14. Verfahren nach Anspruch 1, wobei der Strom von stickstoffangereicherter Luft eine Stickstoffkonzentration im Bereich von 79 bis 99,5 % aufweist.

15. Verfahren nach Anspruch 1, wobei die Kohle nicht in einer Aufschlämmung mit Wasser vorliegt.

## Revendications

1. Procédé intégré de valorisation et de combustion de charbon, comprenant les étapes consistant à : séparer de l'air en courants d'air enrichi en oxygène et d'air enrichi en azote ; chauffer le courant d'air enrichi en azote ; introduire le courant d'air enrichi en azote chauffé dans un appareil de valorisation du charbon contenant du charbon ; permettre le contact entre l'air enrichi en azote chauffé et le charbon dans l'appareil de valorisation du charbon pendant une durée choisie ; introduire le courant d'air enrichi en oxygène et le charbon issu de l'appareil de valorisation du charbon dans une chambre de combustion ; brûler le charbon et l'air enrichi en oxygène dans la chambre de combustion afin de produire un gaz de combustion ; sécher, purifier et comprimer le gaz de combustion pour produire un fluide riche en dioxyde de carbone ; introduire le fluide riche en dioxyde de carbone dans l'appareil de valorisation du charbon ; et permettre le contact entre le fluide riche en dioxyde de carbone et le charbon dans l'appareil de valorisation du charbon pendant une durée choisie, les étapes consistant à permettre le contact entre ledit air enrichi en azote chauffé et ledit charbon et à permettre le contact entre ledit fluide riche en dioxyde de carbone et ledit charbon n'étant pas simultanées.

2. Procédé selon la revendication 1, comprenant également les étapes consistant à : recueillir une partie du gaz de combustion issu de la chambre de combustion avant la réalisation de ladite étape de séchage, purification et compression ; et combiner le gaz de combustion recueilli avec le courant de gaz enrichi en oxygène introduit dans la chambre de combustion.

3. Procédé selon la revendication 1, comprenant également les étapes consistant à : permettre au fluide riche en dioxyde de carbone de sortir de l'appareil de valorisation du charbon et d'entrer dans une première unité de nettoyage, un contact entre le fluide riche en dioxyde de carbone et le charbon dans l'appareil de valorisation du charbon résultant en une solvatation d'une partie des constituants non polaires du charbon dans le fluide riche en dioxyde de carbone ; séparer une partie du dioxyde de carbone du fluide riche en dioxyde de carbone et des constituants non polaires combinés dans la première unité de nettoyage ; réintroduire le dioxyde de carbone séparé dans l'appareil de valorisation du charbon ; éliminer des constituants non polaires au moins une partie de la teneur en composants volatils des constituants non polaires ; et introduire la teneur en composants volatils séparée dans la chambre de combustion.

4. Procédé selon la revendication 1, dans lequel, pendant ladite étape consistant à permettre le contact du fluide riche en dioxyde de carbone, l'appareil de valorisation du charbon est scellé et a une pression supérieure à la pression ambiante.

5. Procédé selon la revendication 1, dans lequel le fluide riche en dioxyde de carbone est un liquide.

6. Procédé selon la revendication 1, dans lequel le fluide riche en dioxyde de carbone est un gaz.

7. Procédé selon la revendication 1, dans lequel le fluide riche en dioxyde de carbone a une pression supérieure ou égale à 1 000 psia (69 bara).

8. Procédé selon la revendication 1, comprenant également les étapes consistant à : permettre à l'air enrichi en azote de sortir de l'appareil de valorisation du charbon et d'entrer dans une seconde unité de nettoyage, le contact entre l'air enrichi en azote et le charbon dans l'appareil de valorisation du charbon résultant en une élimination d'une partie de l'humidité du charbon ; séparer l'humidité de l'air enrichi en azote dans la seconde unité de nettoyage pour produire de l'air enrichi en azote sec ; et introduire l'air enrichi en azote sec dans l'appareil de valorisation du charbon.

9. Procédé selon la revendication 1, dans lequel, pendant ladite étape consistant à permettre le contact de l'air enrichi en azote chauffé, l'appareil de valorisation du charbon est aéré.

10. Procédé selon la revendication 1, dans lequel le courant d'air enrichi en azote est chauffé avec la chaleur produite par ladite étape de combustion.

11. Procédé selon la revendication 1, dans lequel le courant d'air enrichi en azote est chauffé avec la chaleur produite par une flamme séparée de ladite étape de combustion.

12. Procédé selon la revendication 1, dans lequel le courant d'air enrichi en azote est porté à une température supérieure à 100 °C.

13. Procédé selon la revendication 1, dans lequel le gaz enrichi en oxygène a une concentration d'oxygène dans une plage allant de 21 % à 99,5 %.

14. Procédé selon la revendication 1, dans lequel le gaz enrichi en azote a une concentration d'azote dans une plage allant de 79 % à 99,5 %.

15. Procédé selon la revendication 1, dans lequel le charbon n'est pas dans une pâte avec de l'eau.
